# EUROPÄISCHE PATENTSCHRIFT

(11) **EP 4 296 715 B1**
(45) Veröffentlichungstag und Bekanntmachung des Hinweises auf die Patenterteilung: **03.12.2025**
(21) Anmeldenummer: 23177592.5
(22) Anmeldetag: 06.06.2023
(51) Int. Cl.: G01S 7/539, G01S 15/42, G01S 15/46, G01S 15/52, G01S 15/58, G01S 15/86, G06V 20/58, G01S 15/66, G01S 15/87, G01S 15/89, G06T 7/70, G06V 10/764, G06V 10/80, G01S 15/931

(54) **VERFAHREN ZUR ERMITTLUNG EINER ANGENÄHERTEN OBJEKTPOSITION EINES DYNAMISCHEN OBJEKTES, COMPUTERPROGRAMM, VORRICHTUNG UND FAHRZEUG**
METHOD FOR DETERMINING AN APPROXIMATE OBJECT POSITION OF A DYNAMIC OBJECT, COMPUTER PROGRAM, DEVICE, AND VEHICLE
PROCÉDÉ DE DÉTERMINATION D'UNE POSITION APPROXIMATIVE D'UN OBJET DYNAMIQUE, PROGRAMME INFORMATIQUE, DISPOSITIF ET VÉHICULE

(30) Priorität: 20.06.2022 DE 102022206123
(43) Veröffentlichungstag der Anmeldung: 27.12.2023
(73) Patentinhaber: Robert Bosch GmbH, 70442 Stuttgart (DE)
(72) Erfinder: Landsgesell, Jonas, 88487 Mietingen (DE); Tchorzewski, Michael, 71034 Boeblingen (DE); Rempfer, Georg, 71229 Leonberg (DE)

(56) Entgegenhaltungen:
- EP-A1- 2 793 045
- DE-T5- 112016 003 241
- US-A1- 2018 144 207

## Beschreibung

Die vorliegende Erfindung betrifft ein Verfahren zur Ermittlung einer angenäherten Objektposition eines dynamischen Objektes im Umfeld eines Fahrzeugs, welches zwei Ultraschallsensoren und mindestens eine Kamera aufweist. Die Erfindung betrifft auch ein Computerprogramm, umfassend Befehle, die bei der Ausführung des Programms durch einen Computer diesen veranlassen, die Schritte des erfindungsgemäßen Verfahrens auszuführen. Die Erfindung betrifft darüber hinaus eine Vorrichtung, insbesondere eine zentrale oder zonale Recheneinheit oder ein Steuergerät für ein Fahrzeug, aufweisend eine Recheneinheit, die so konfiguriert ist, dass sie die Schritte des erfindungsgemäßen Verfahrens ausführt. Außerdem betrifft die Erfindung ein Fahrzeug mit dieser Vorrichtung.

Die Schrift US 2018/144207 A1 offenbart eine Fußgängerdetektionsvorrichtung und ein Fußgängerdetektionsverfahren.

Das Dokument DE 11 2016 003241 T5 offenbart ein Verfahren und eine Steuereinheit zum Erkennen und Verfolgen eines verletzlichen Verkehrsteilnehmers (VRU). Das Verfahren umfasst ein Erkennen eines Objekts durch eine Kamera des Fahrzeugs; ein Einordnen des erkannten Objekts als einen VRU; ein Erkennen des Objekts durch einen Sensor des Fahrzeugs; ein Zuordnen des eingeordneten VRU zu dem mit dem Sensor erkannten Objekt; und ein Verfolgen des VRU durch den Sensor.

Die Schrift EP 2 793 045 A1 offenbart ein Verfahren zur Überprüfung eines Umfelderfassungssystems eines Fahrzeugs, wobei das Umfelderfassungssystem mindestens zwei verschiedene Umfeldsensortypen umfasst.

### Stand der Technik

Ein Parkpilotsystem für ein Fahrzeug umfasst typischerweise mehrere Ultraschallsensoren und eine Auswerteeinheit, die die Daten der Sensoren erfasst, verarbeitet und Warnungen über mögliche Hindernisse ausgibt. Zusätzlich ist in Parkpilotsystemen eine Verwendung von Kameradaten beziehungsweise Kamerabildern bekannt, wodurch beispielsweise statische und/oder dynamische Objekte in der Fahrzeugumgebung basierend auf Bilddaten durch angelernte maschinelle Erkennungsverfahren erkannt und beispielsweise für Notbremsassistenten weiterverarbeitet und/oder eine Visualisierung der Umgebung des Fahrzeugs für den Fahrer durch Erzeugung einer Surround View - Ansicht oder einer Top Down - Ansicht mit Overlays beziehungsweise Einblendungen zusätzlicher Informationen erzeugt werden. Die erfassten Kamerabilder können zu diesen Zwecken beispielsweise entzerrt, aufbereitet und transformiert werden, insbesondere mittels einer zentralen Recheneinheit, mittels einer zonalen Recheneinheit oder mittels eines Steuergeräts.

Die Ultraschallsensoren eines Parkpilotsystems werden üblicherweise an den vorderen und hinteren Stoßfängern eines Fahrzeugs zur Ermittlung von Abstandsdaten zwischen dem Fahrzeug und Objekten in der Umgebung des Fahrzeugs jeweils mehrere Ultraschallsensoren über die gesamte Fahrzeugbreite angeordnet. Die Ultraschallsensoren sind typischerweise dazu eingerichtet, ein Ultraschallsignal auszusenden. Dieses ausgesendete Ultraschallsignal wird an Hindernissen reflektiert. Das reflektierte Ultraschallsignal wird von den Ultraschallsensoren wieder als Echosignal empfangen und aus der Laufzeit ein Abstand zum Hindernis berechnet. Die Ermittlung des Abstandes erfolgt im Allgemeinen in Abhängigkeit einer Laufzeit eines direkten und/oder indirekten Echosignals beziehungsweise eines direkten und/oder indirekten reflektierte Ultraschallsignals beziehungsweise Reflexionssignals zu einem ausgesendeten Ultraschallsignal. Die Bestimmung des Abstands erfolgt typischerweise mittels eines Sensor-ASIC, welcher in einem Gehäuse des Ultraschallsensors angeordnet ist. Die Sensordaten eines Ultraschallsensors repräsentieren oder umfassen somit beispielsweise das reflektierte Ultraschallsignal beziehungsweise das empfangene Echosignal und/oder den berechneten Abstand sowie optionale Eigenschaften des empfangenen Echosignals, insbesondere relativ zum ausgesendeten Ultraschallsignal. Eine Reflexionsursprungsposition kann typischerweise gemäß dem Trilaterationsprinzips in Abhängigkeit wenigstens eines direkten und eines indirekten empfangenen Echosignals und/oder in Abhängigkeit wenigstens zweier direkter oder wenigstens zweier indirekter empfangenen Echosignale ermittelt werden. Das Trilaterationsprinzip setzt beispielsweise voraus, dass der zu einem aussendenden Ultraschallsensor rechts und/oder links benachbarte Ultraschallsensor dazu eingerichtet ist, ein Kreuzecho beziehungsweise das empfangene Echosignal beziehungsweise das indirekte Reflexionssignal zu dem ausgesendeten Ultraschallsignal zu empfangen. Die Bestimmung der Reflexionsursprungsposition erfolgt vorzugsweise mittels einer Recheneinheit, beispielsweise mittels eines Mikrocontrollers, welche beispielsweise im Steuergerät oder in der zonalen oder zentralen Recheneinheit angeordnet ist, wobei diese Recheneinheit, vorzugsweise ein Prozessor, vorteilhafterweise Sensordaten mehrerer, insbesondere benachbarter, Ultraschallsensoren erfasst und verarbeitet.

Das Dokument DE 10 2010 045 657 A1 offenbart ein Umfeld-Überwachungssystem für ein Fahrzeug, wobei das Umfeld-Überwachungssystem aufweist: mindestens zwei Abstandssensoren zur Abstandserkennung durch Laufzeitmessung von Detektionssignalen.

Das Dokument DE 10 2019 205 565 A1 offenbart ein Verfahren zum Bewerten einer Objekthöhe anhand von empfangenen Ultraschallsignalen.

Die Schrift DE 10 2018 216 790 A1 offenbart ein Verfahren zur Bewertung einer Auswirkung eines Objektes im Umfeld eines Fortbewegungsmittels auf ein Fahrmanöver des Fortbewegungsmittels.

Es ist bekannt, dass die Position von erkannten Objekten basierend auf wenigstens einem Kamerabild abgeschätzt werden kann, beispielsweise die Position von einem Fußgänger, wobei beispielsweise eine Fußpunktbestimmung des Objektes erfolgt. Diese Positionsabschätzung für Fußgänger funktioniert aber z.B. nicht, wenn sich die Objekte in unmittelbarer Nähe einer Fahrzeugkamera befinden, da dann die Objekte nicht mehr vollständig im Kamerabild erfasst werden können. In Parkpilotsystemen können mehrere Fahrzeugkameras mit Weitwinkelobjektiven verwendet und eine Surround View - Ansicht oder eine Top Down - Ansicht für den Fahrer mittels einer Anzeigevorrichtung angezeigt werden. Diese Weitwinkelkameras sind prinzipiell besser dazu geeignet naheliegende Objekte zu erkennen, dennoch kann die kamerabasierte Positionsabschätzung für Objekte im Nahbereich des Fahrzeugs versagen.

Der Kalman-Filter dient zur iterativen Schätzung von Zustandsparametern eines Systems basierend auf fehlerbehafteten Messungen, wobei die Fehler der Messungen reduziert werden. Die Verwendung ist zu Auswertung von Radarsignalen oder GNSS-Daten zur Positionsbestimmung sich bewegender Objekte bekannt. Dabei besteht das Problem der Assoziation von Messungen zu einem Track des bewegten Objektes. Das heißt, wenn falsche Messungen in einen Track des Objektes assoziiert werden, resultiert ein relativ großer Fehler bezüglich der bestimmten Position und weiteren Auswertungen. Beispielsweise können bei einem typischen Parkpilotsystem Fußgänger und benachbarte Bordsteine häufig nicht unterschieden werden, wodurch die Positionsbestimmung und Bewegungsschätzung für einen Fußgänger ungenau wird.

Die Aufgabe der vorliegenden Erfindung ist es, eine Ermittlung einer Objektposition eines dynamischen Objektes im Umfeld eines Fahrzeuges zu verbessern, insbesondere bezüglich einer kontinuierlichen Verfolgung eines Fußgängers als dynamisches Objekt beziehungsweise dessen Tracking im Nahbereich des Fahrzeugs.

### Offenbarung der Erfindung

Die vorstehende Aufgabe wird erfindungsgemäß entsprechend der unabhängigen Ansprüche 1, 11 und 14 gelöst.

Die Erfindung betrifft ein Verfahren zur Ermittlung einer näherungsweise tatsächlichen beziehungsweise angenäherten Objektposition eines dynamischen Objektes im Umfeld eines Fahrzeugs. Das Fahrzeug weist mindestens zwei Ultraschallsensoren und mindestens eine Fahrzeugkamera auf. Das Verfahren umfasst eine Erfassung von Sensordaten mittels der wenigstens zwei Ultraschallsensoren des Fahrzeugs. Die Erfassung der Sensordaten erfolgt insbesondere kontinuierlich. Die Sensordaten repräsentieren insbesondere wenigstens ein erfasstes Echosignal zu einem ausgesendeten Ultraschallsignal zwischen dem Fahrzeug und einem Objekt in der Umgebung des Fahrzeugs sowie vorzugsweise einen Abstand zwischen dem Fahrzeug und dem Objekt sowie optional wenigstens eine Eigenschaft des empfangenen Echosignals. Die Eigenschaft des erfassten Echosignals basiert insbesondere auf einer Auswertung des erfassten Echosignals und repräsentiert vorteilhafterweise eine Wahrscheinlichkeit für das Vorliegen eines dynamischen Objektes. Die Auswertung des Echosignals zur Bestimmung einer Wahrscheinlichkeit für das Vorliegen eines dynamischen Objektes ist ein bevorzugter optionaler Verfahrensschritt. Anschließend wird eine aktuelle Reflexionsursprungsposition eines statischen oder dynamischen Objektes zumindest in Abhängigkeit der erfassten Sensordaten der wenigstens zwei Ultraschallsensoren des Fahrzeugs ermittelt, insbesondere durch ein Trilaterationsverfahren. Die Ermittlung der aktuellen Reflexionsursprungsposition erfolgt insbesondere kontinuierlich basierend auf den aktuell erfassten Sensordaten der wenigstens zwei Ultraschallsensoren des Fahrzeugs. In einem weiteren Verfahrensschritt wird wenigstens ein Kamerabild mittels der Fahrzeugkamera erfasst, insbesondere erfolgt eine kontinuierliche Erfassung eines Kamerabildes mittels der Fahrzeugkamera. Vorzugsweise wird demnach eine Abfolge von Kamerabildern mittels der Fahrzeugkamera erfasst. Anschließend wird das dynamische Objekt in Abhängigkeit des wenigstens einen erfassten Kamerabildes durch wenigstens ein (erstes) angelerntes maschinelles Erkennungsverfahren erkannt, wobei das angelernte maschinelles Erkennungsverfahren vorzugsweise ein trainiertes neuronales Netz ist. Beispielsweise ist das erkannte dynamische Objekt ein anderes bewegtes oder unbewegtes Fremdfahrzeug, ein stehender oder laufender Fußgänger, ein Fahrradfahrer oder ein Tier, beispielsweise ein Hund oder eine Katze. Danach erfolgt eine Ermittlung einer aktuellen Schätzposition des erkannten Objektes relativ zum Fahrzeug in Abhängigkeit des wenigstens einen erfassten Kamerabildes. Es kann vorgesehen sein, dass diese Schätzposition zusätzlich mittels einer Bewegungsgleichung ermittelt wird, beispielsweise, wenn ein Fußgänger als dynamisches Objekt in dem aktuellen Bild nicht mehr erkannt werden kann, da er dieses zumindest teilweise verdeckt. Die ermittelte aktuelle Schätzposition kann alternativ oder zusätzlich durch eine Fußpunkt-Ermittlung oder durch ein anderes angelerntes maschinelles Erkennungsverfahren, insbesondere ein trainiertes neuronales Netz, und/oder in Abhängigkeit einer Bewegungsschätzung des erkannten Objektes bestimmt werden. Die aktuelle Schätzposition verändert sich insbesondere laufend im zeitlichen Verlauf, da das dynamische Objekt beweglich ist. Die Bewegungsschätzung des erkannten Objektes kann vorteilhafterweise basierend auf einer Änderung einer Größe einer Objektbox zu dem erkannten Objekt und einer Fußpunktbestimmung des erkannten Objektes in zeitlich nacheinander erfassten Kamerabildern erfolgen. Falls in einem anschließenden Verfahrensschritt erkannt wird, dass ein Positionsabstand zwischen der aktuellen Schätzposition des erkannten dynamischen Objektes in der Umgebung des Fahrzeug, insbesondere relativ zum Fahrzeug, und der aktuellen Reflexionsursprungsposition kleiner oder gleich einem Distanzschwellenwert ist, wird die aktuelle Reflexionsursprungsposition in Abhängigkeit der zur Ermittlung der aktuellen Reflexionsursprungsposition zugrundeliegenden Sensordaten und/oder insbesondere in Abhängigkeit der wenigstens einen Eigenschaft des Echosignals, als zu dem erkannten dynamischen Objekt zugehörig klassifiziert, wobei diese Eigenschaft des Echosignals optional in Abhängigkeit der Sensordaten beziehungsweise des Echosignals ermittelt werden kann. Die Klassifizierung erfolgt bevorzugt in Abhängigkeit einer Amplitude des zugrundeliegenden erfassten Echosignals der Sensordaten und/oder in Abhängigkeit eines Korrelationskoeffizienten zwischen dem erfassten Echosignal und dem ausgesendeten Ultraschallsignal als jeweilige Eigenschaft des erfassten Echosignals der erfassten Sensordaten. Die Sensordaten können diese Eigenschaft umfassen beziehungsweise repräsentieren, wenn eine Recheneinheit des Ultraschallsensors die Eigenschaft in Abhängigkeit des Echosignals und insbesondere des ausgesendeten Ultraschallsignals ermittelt hat und diese wenigstens eine ermittelte Eigenschaft in den Sensordaten bereitgestellt wird. Alternativ oder zusätzlich kann mindestens eine Eigenschaft des Echosignals auch im Verfahren in Abhängigkeit der erfassten Sensordaten ermittelt werden. Vorzugsweise wird mittels eines zweiten angelernten maschinellen Erkennungsverfahrens, insbesondere eines zweiten neuronalen Netzes, basierend auf mindestens zwei Eigenschaften des Echosignals erkannt, ob die Reflexionsursprungsposition als dem dynamischen Objekt zugehörig klassifiziert werden kann oder nicht. Anschließend wird die angenäherte Objektposition des dynamischen Objektes in Abhängigkeit der als dem dynamischen Objekt zugehörig klassifizierten Reflexionsursprungspositionen, insbesondere durch einen Kalman-Filter, ermittelt. Diese Ermittlung der angenäherten Objektposition des dynamischen Objektes wird insbesondere kontinuierlich durchgeführt. Durch die Erfindung resultiert der Vorteil, dass im Nahbereich des Fahrzeugs eine genaue angenäherte Objektposition des basierend auf Kamerabildern erkannten dynamischen Objektes in Abhängigkeit von Ultraschallmessungen bestimmt werden kann. Die Ultraschallsensoren liefern im Nahbereich des Fahrzeugs sehr genaue Messwerte, und insbesondere sind die Kamerabilder im Nahbereich des Fahrzeugs teilweise nur schwer auswertbar. Des Weiteren wird die Zuordnung beziehungsweise Assoziation der bestimmten Reflexionsursprungspositionen zu dem dynamischen Objekten verbessert, da Messwerte zu statischen Objekten, beispielsweise Bordsteinkanten, Bepflanzungen, Pfosten, oder ähnlichem nicht berücksichtigt werden. Besonders vorteilhaft ist, dass auch angenäherte Objektpositionen von Fußgängern, welche sich nah am Fahrzeug befinden, d.h. z.B. in einer Entfernung kleiner oder gleich 2 Metern, sehr genau bestimmt werden können, was beispielsweise für Einparkvorgänge auf Parkplätzen relevant ist, da diese Fußgängerposition nicht mehr genau kamerabasiert abgeschätzt werden können, da das Kamerabild die Fußgänger nicht vollständig erfassen kann, insbesondere nicht die Beine und Füße.

In einer optionalen Ausgestaltung der Erfindung erfolgt die Klassifikation der aktuellen Reflexionsursprungsposition als dem erkannten dynamischen Objekt zugehörig zusätzlich in Abhängigkeit der zugrundeliegenden Sensordaten der während einer vorgegebenen Zeitspanne vor dem aktuellen Zeitpunkt in einer Umgebung der aktuellen Reflexionsursprungsposition liegenden als dem erkannten dynamischen Objekt zugehörig klassifizierten Reflexionsursprungspositionen, wobei die vorgegebene Zeitspanne beispielsweise in einem Bereich zwischen 10 Millisekunden und 3 Sekunden liegt. Mit anderen Worten wird bei der Klassifikation berücksichtigt, ob die zugrundeliegenden Sensordaten zu dem erkannten dynamischen Objekt zugehörig klassifizierten Reflexionsursprungspositionen in der Umgebung der aktuellen Reflexionsursprungsposition auf eine Wahrscheinlichkeit der Zugehörigkeit der aktuellen Reflexionsursprungsposition zu dem dynamischen Objekt hindeuten. Diese Klassifikation kann vorteilhafterweise durch ein weiteres angelerntes maschinelles Erkennungsverfahren erfolgen. Alternativ oder zusätzlich kann die aktuelle Reflexionsursprungsposition insbesondere den vorher zu dem erkannten dynamischen Objekt zugehörig klassifizierten Reflexionsursprungspositionen basierend auf einer ähnlichen Eigenschaft des Echosignals der Sensordaten zugeordnet werden. Alternativ oder zusätzlich kann die aktuelle Reflexionsursprungsposition insbesondere basierend auf einer Plausibilität der zeitlich veränderten Lage der vorher zu dem erkannten dynamischen Objekt zugehörig klassifizierten Reflexionsursprungspositionen als dem erkannten dynamischen Objekt zugehörig klassifizierten werden oder nicht. Da die Informationen der als dem dynamischen Objekt zugehörig klassifizierten ermittelten Reflexionsursprungspositionen aus der Umgebung zu der ermittelten aktuellen Reflexionsursprungsposition berücksichtigt werden, resultiert der Vorteil, dass die aktuelle Reflexionsursprungsposition genauer als zu dem erkannten dynamischen Objekt zugehörig klassifiziert werden kann. Insbesondere können in dieser Ausgestaltung ermittelte aktuelle Reflexionsursprungsposition verbessert als zu statischen oder anderen dynamischen Objekten zugehörig klassifiziert werden, d.h. als nicht zu dem erkannten dynamischen Objekt zugehörig klassifiziert werden. Durch die Ausgestaltung erfolgt somit die Assoziation der Reflexionsursprungsposition zum dynamischen Objekt zuverlässiger, wodurch die Ermittlung der angenäherten Objektposition des dynamischen Objektes genauer wird.

In einer Weiterführung der vorherigen optionalen Ausgestaltung umfasst die Umgebung der aktuellen Reflexionsursprungsposition diejenigen dem dynamischen Objekt zugeordneten beziehungsweise als dem dynamischen Objekt zugehörig klassifizierte Reflexionsursprungspositionen, welche einen Abstand zu der aktuellen Reflexionsursprungsposition kleiner oder gleich einem Abstandsschwellenwert aufweisen. Dieser Abstandsschwellenwert wird insbesondere in Abhängigkeit einer Geschwindigkeit des Fahrzeugs angepasst. Alternativ oder zusätzlich umfasst die Umgebung der aktuellen Reflexionsursprungsposition wenigstens ein dem dynamischen Objekt zugeordnetes Ultraschallcluster, wobei das Ultraschallcluster insbesondere als dem dynamischen Objekt zugehörig klassifizierte Reflexionsursprungspositionen und/oder eine Ausdehnung und/oder eine vorgegebene geometrische Form aufweist. Alternativ oder zusätzlich umfasst die Umgebung der aktuellen Reflexionsursprungsposition wenigstens eine Gitternetzzelle eines Gitternetzes der aktuellen Reflexionsursprungsposition, wobei das Gitternetz die Umgebung des Fahrzeugs unterteilt. Durch diese Arten der Umgebungsbeschreibung der aktuellen Reflexionsursprungsposition resultiert der Vorteil, dass als dem dynamischen Objekt zugehörig klassifizierte Reflexionsursprungspositionen weiter gefiltert werden, so dass beispielsweise verschiedene dynamische Objekte der gleichen Gattung, beispielsweise unterschiedliche Fußgänger leichter voneinander getrennt werden können, wodurch die Ermittlung der angenäherten Objektposition des einzelnen dynamischen Objektes genauer wird.

In einer anderen optionalen Weiterführung der Erfindung wird eine aktuelle Objektgeschwindigkeit des dynamischen Objektes und/oder eine aktuelle Objektbewegungsrichtung des dynamischen Objektes in Abhängigkeit der ermittelten angenäherten Objektpositionen des dynamischen Objektes zu unterschiedlichen Zeitpunkten ermittelt. In dieser Weiterführung resultiert der Vorteil, dass die Ermittlung der Objektgeschwindigkeit und/oder der Objektbewegungsrichtung genau erfolgt, da die angenäherten Objektpositionen genau ermittelt werden.

In einer weiteren optionalen Ausführung wird die Ermittlung der angenäherten Objektposition des dynamischen Objektes und/oder die Ermittlung der aktuellen Objektgeschwindigkeit und/oder der aktuellen Objektbewegungsrichtung des dynamischen Objektes jeweils nicht durchgeführt, wenn eine Anzahl der als dem dynamischen Objekt zugehörig klassifizierten Reflexionsursprungspositionen eine vorgegebene Konfidenzanzahl unterschreitet. In dieser optionalen Ausführung wird eine höhere Zuverlässigkeit der ermittelten angenäherten Objektposition, der ermittelten Objektgeschwindigkeit und der ermittelten Objektbewegungsrichtung erreicht.

Des Weiteren kann es vorgesehen sein, dass eine Bestimmung einer statistischen Unsicherheit in Abhängigkeit der erfassten Sensordaten und/oder der ermittelten aktuellen Reflexionsursprungsposition und/oder der als dem dynamischen Objekt zugehörig klassifizierten Reflexionsursprungspositionen und/oder der ermittelten angenäherten Objektposition durchgeführt wird. Anschließend wird der Distanzschwellenwert in Abhängigkeit der bestimmten statistischen Unsicherheit angepasst. In dieser optionalen Ausführung wird die Zuverlässigkeit und die Genauigkeit der ermittelten angenäherten Objektposition, der ermittelten Objektgeschwindigkeit und der ermittelten Objektbewegungsrichtung gesteigert.

Vorzugsweise liegt der Distanzschwellenwert in einem Bereich zwischen 0,1 Meter und 5 Meter, insbesondere beträgt der Distanzschwellenwert 0,5 Meter, 1 Meter, 1,5 Meter oder 3 Meter. Dadurch resultiert der Vorteil, dass Reflexionsursprungspositionen, welche ein anderes dynamisches Objekt in der Umgebung des Fahrzeugs repräsentieren, nicht fälschlicherweise durch das Verfahren beziehungsweise den Algorithmus als dem erkannten dynamischen Objekt zugehörig klassifiziert werden beziehungsweise mehrere dynamische Objekte voneinander getrennt werden können.

Der Distanzschwellenwert wird optional in Abhängigkeit der Fahrzeuggeschwindigkeit angepasst. Dadurch resultiert der Vorteil, dass eine zunehmende Ungenauigkeit in der Ermittlung der aktuellen Schätzposition des erkannten Objektes mit steigender Fahrzeuggeschwindigkeit berücksichtigt wird, so dass eine bei höheren Fahrzeuggeschwindigkeiten zuverlässigere Klassifikation der Reflexionsursprungspositionen als dem erkannten dynamischen Objekt zugehörig erfolgt, so dass die Ermittlung der angenäherten Objektposition des dynamischen Objektes in Abhängigkeit der als dem dynamischen Objekt zugehörig klassifizierten Reflexionsursprungspositionen genauer erfolgt.

In einer anderen optionalen Ausführung der Erfindung kann in einem zusätzlichen Verfahrensschritt eine Normalisierung zumindest eines Teils der zur Ermittlung der aktuellen Reflexionsursprungsposition zugrundeliegenden Sensordaten bezüglich ihrer Amplitude basierend auf einer Winkellage der ermittelten aktuellen Reflexionsursprungsposition zum Erfassungsbereich des Ultraschallsensors durchgeführt werden. Die Klassifikation der aktuellen Reflexionsursprungsposition als dem erkannten dynamischen Objekt zugehörig erfolgt in dieser Ausführung in Abhängigkeit der normalisierten zugrundeliegenden Sensordaten und in Abhängigkeit eines Amplitudenschwellenwertes, wobei vorzugsweise diejenigen Reflexionsursprungspositionen, welche eine normalisierte Amplitude kleiner oder gleich dem Amplitudenschwellenwert aufweisen, als zu dem erkannten dynamischen Objekt zugehörig klassifiziert werden. Durch diese Ausführung wird die jeweilige aktuelle Reflexionsursprungsposition zuverlässig klassifiziert.

Optional kann es des Weiteren vorgesehen sein, dass zusätzlich ein Korrelationskoeffizienten zwischen zumindest einem Teil der erfassten der Reflexionsursprungsposition zugrundeliegenden Sensordaten und dem vom Ultraschallsensor ausgesendeten Sensorsignal ermittelt wird. In dieser Ausgestaltung erfolgt die Klassifikation der aktuellen Reflexionsursprungsposition als dem erkannten dynamischen Objekt zugehörig in Abhängigkeit des ermittelten Korrelationskoeffizienten und in Abhängigkeit eines Korrelationsschwellenwertes, wobei vorzugsweise diejenigen Reflexionsursprungspositionen, welche einen Korrelationskoeffizienten kleiner oder gleich dem Korrelationsschwellenwert aufweisen, als zu dem erkannten dynamischen Objekt zugehörig klassifiziert werden. Durch diese Ausführung wird die jeweilige aktuelle Reflexionsursprungsposition zuverlässiger als dem dynamischen Objekt zugehörig klassifiziert, insbesondere, wenn die Klassifikation zusätzlich in Abhängigkeit der normalisierten zugrundeliegenden Sensordaten und in Abhängigkeit eines Amplitudenschwellenwertes durchgeführt wird.

In einer anderen optionalen Ausgestaltung der Erfindung wird eine Anzahl der Reflexionen zu einem vom Ultraschallsensor ausgesendeten Sensorsignal in Abhängigkeit zumindest eines Teils der erfassten der aktuellen Reflexionsursprungsposition zugrundeliegenden Sensordaten ermittelt. Anschließend wird die Klassifikation der aktuellen Reflexionsursprungsposition als dem erkannten dynamischen Objekt zugehörig in Abhängigkeit der ermittelten Anzahl an Reflexionen und in Abhängigkeit eines Anzahlschwellenwertes durchgeführt, wobei diejenigen Reflexionsursprungspositionen, welche eine Anzahl an Reflexionen kleiner oder gleich dem Anzahlschwellenwert aufweisen, als zu dem erkannten dynamischen Objekt zugehörig klassifiziert werden. Durch diese Ausführung wird die jeweilige aktuelle Reflexionsursprungsposition sehr zuverlässig als dem dynamischen Objekt zugehörig klassifiziert, insbesondere, wenn die Klassifikation zusätzlich in Abhängigkeit der normalisierten zugrundeliegenden Sensordaten und in Abhängigkeit eines Amplitudenschwellenwertes durchgeführt wird, und/oder insbesondere, wenn die Klassifikation zusätzlich in Abhängigkeit des ermittelten Korrelationskoeffizienten und in Abhängigkeit eines Korrelationsschwellenwertes erfolgt.

Die Erfindung betrifft ferner ein Computerprogramm, umfassend Befehle, die bei der Ausführung des Programms durch eine Vorrichtung gemäß einem der Ansprüche 11 oder 12 diese veranlassen, die Schritte des Verfahrens gemäß einem der Ansprüche 1 bis 10 auszuführen.

Die Erfindung betrifft auch eine Vorrichtung beziehungsweise eine zentrale Recheneinheit oder eine zonale Recheneinheit oder ein Steuergerät für ein Fahrzeug. Die zentrale Recheneinheit, die zonale Recheneinheit oder das Steuergerät weisen wenigstens einen ersten Signaleingang auf, welcher dazu eingerichtet ist, wenigstens ein erstes Signal bereitzustellen, welches erfasste Sensordaten von mindestens einem Ultraschallsensor des Fahrzeugs repräsentiert. Die Vorrichtung umfasst außerdem einen zweiten Signaleingang, welcher dazu eingerichtet ist, ein zweites Signal bereitzustellen, welches erfasste Kamerabilder einer Fahrzeugkamera repräsentiert. Eine Recheneinheit der Vorrichtung, insbesondere ein Prozessor, ist so konfiguriert, dass sie die Schritte des erfindungsgemäßen Verfahrens ausführt.

Die Vorrichtung umfasst des Weiteren einen optionalen Signalausgang, wobei der Signalausgang dazu eingerichtet ist, ein Steuersignal für eine Anzeigevorrichtung, eine Bremseinrichtung, eine Lenkeinrichtung und/oder einen Antriebsmotor in Abhängigkeit des von der Recheneinheit ausgeführten Verfahrens zu erzeugen.

Die Erfindung betrifft darüber hinaus ein Fahrzeug, umfassend die erfindungsgemäße Vorrichtung beziehungsweise die zentrale erfindungsgemäße Recheneinheit oder die erfindungsgemäße zonale Recheneinheit oder das erfindungsgemäße Steuergerät.

Weitere Vorteile ergeben sich aus der nachfolgenden Beschreibung von Ausführungsbeispielen mit Bezug zu den Figuren.
Figur 1: Fahrzeug und dynamisches Objekt in der nahen Umgebung des Fahrzeugs
Figur 2: Verfahrensablauf als Blockschaltbild
Figur 3: Statistische Verteilung der Amplituden von Echosignalen
Figur 4: Statistische Verteilung der Korrelationskoeffizienten von Echosignalen
Figur 5a: Ermittelte Reflexionsursprungspositionen in der Umgebung des Fahrzeugs
Figur 5b: spätere Reflexionsursprungspositionen in der Umgebung des Fahrzeugs

### Ausführungsbeispiele

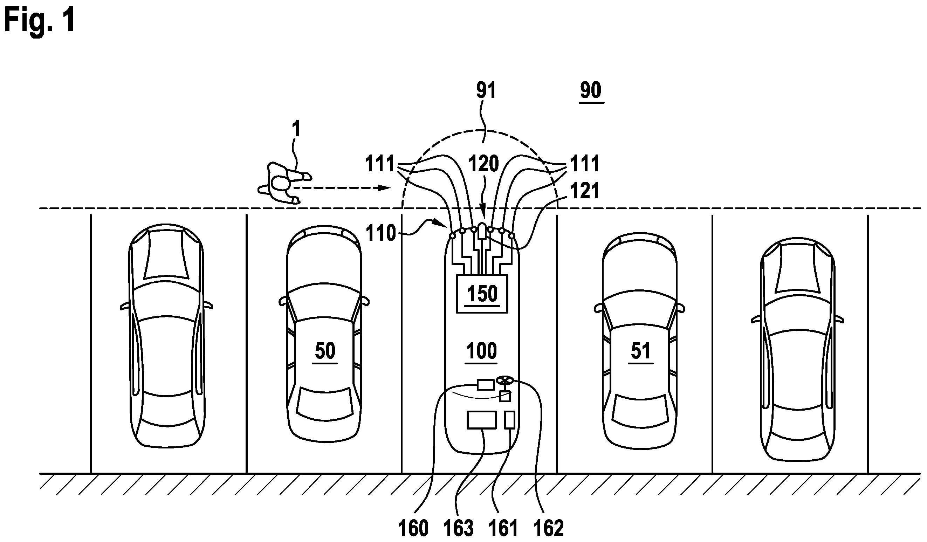

In Figur 1 ist ein Fahrzeug 100 in einer Querlücke auf einem Parkplatz und ein dynamisches Objekt 1 in der nahen Umgebung des Fahrzeugs 100 schematisch in Aufsicht von oben dargestellt. Das dynamische Objekt 1 ist in diesem Beispiel ein Fußgänger. Das Fahrzeug 100 weist ein Ultraschallsensorsystem 110 auf, welches an dem vorderen Stoßfänger und an dem hinteren Stoßfänger jeweils vier Ultraschallsensoren 111 umfasst. Das Fahrzeug 100 weist außerdem ein Kamerasystem 120 auf, welches wenigstens die hintere Fahrzeugkamera 121 umfasst, wobei die Fahrzeugkamera 121 vorzugsweise ein Weitwinkelobjektiv aufweist. Die Fahrzeugkamera 121 ist dazu eingerichtet, die Umgebung 90 des Fahrzeugs 100 zu erfassen. Das Fahrzeug weist eine zentrale Recheneinheit 150 auf. Die zentrale Recheneinheit 150 ist elektrisch mit der wenigstens einen Fahrzeugkamera 121 zur Datenübertragung von Kamerabildern verbunden. Es kann vorteilhafterweise vorgesehen sein, dass das Kamerasystem 120 wenigstens vier Fahrzeugkameras 121 umfasst, welche jeweils an einer anderen Fahrzeugseite angeordnet sind und aus verschiedenen Perspektiven unterschiedliche Bereiche der Umgebung 90 erfassen, so dass die zentrale Recheneinheit 150 oder ein Steuergerät basierend auf den erfassten Kamerabildern der vier Fahrzeugkameras beispielsweise eine Umgebungsansicht erzeugen kann (Surround View-Ansicht). Die zentrale Recheneinheit 150 ist elektrisch auch mit dem Ultraschallsensorsystem beziehungsweise den Ultraschallsensoren 111 zur Datenübertragung von Sensordaten der Ultraschallsensoren 111 verbunden. Die von dem jeweiligen Ultraschallsensor 111 mittels der zentralen Recheneinheit 150 empfangenen Sensordaten umfassen beziehungsweise repräsentieren vorteilhafterweise das jeweilige erfasste Echosignal zu einem ausgesendeten Ultraschallsignal und/oder das ausgesendete Ultraschallsignal und/oder basierend auf dem Echosignal mittels eines ASICs im jeweiligen Ultraschallsensor ermittelte Abstandsdaten zwischen dem Fahrzeug 100 und einem Objekt 1 in der Umgebung 90 des Fahrzeugs 100 und optional zumindest eine Eigenschaft des Echosignals. Das Fahrzeug umfasst ferner eine Anzeigevorrichtung 160, eine Bremseinrichtung 161, eine Lenkeinrichtung 162 und/oder einen Antriebsmotor 163, wobei die zentrale Steuereinheit 150 dazu eingerichtet ist, die Anzeigevorrichtung 160, die Bremseinrichtung 161, die Lenkeinrichtung 162 und/oder den Antriebsmotor 163 in Abhängigkeit der empfangenen beziehungsweise erfassten Sensordaten und/oder der empfangenen beziehungsweise erfassten Kamerabilder anzusteuern. Der Fußgänger wird im Erfassungsbereich der Fahrzeugkamera 121 als dynamisches Objekt 1 erfasst. In der zeitlichen Beobachtung bewegt sich das dynamische Objekt hier an dem benachbart parkenden ersten Fahrzeug als statisches Objekt 50 vorbei. Es könnte die Absicht des Fußgängers als dynamisches Objekt 1 sein, das Fahrzeug 100 entlang der geplanten Bewegungsrichtung zu passieren, wobei sich der Fußgänger an den statischen Objekten 50 und 51 beziehungsweise dem benachbart parkenden ersten und zweiten Fahrzeug vorbeibewegt. Im Nahbereich 91 der Umgebung 90 des Fahrzeuges 100 wird der Fußgänger als dynamisches Objekt 1 einen Erfassungsbereich der Fahrzeugkamera 121 während seiner Bewegung zumindest zeitweise zum Teil verdecken, möglicherweise zeitweise vollständig. Außerdem kann es vorkommen, dass bestimmte Körperteile des Fußgängers als dynamisches Objekt 1 im Nahbereich 91 des Fahrzeugs 100 zeitweise nicht erkennbar sind, beispielsweise der Kopf oder die Füße. Eine genaue Positionsbestimmung des Fußgängers als dynamisches Objekt 1 ist dann basierend auf einem Kamerabild der Fahrzeugkamera 121 nicht möglich, bespielsweise kann in diesen Fällen keine Fußpunktermittlung durchgeführt werden. Die Ultraschallsensoren des Ultraschallsystems 110 erfassen als Objekte die statischen Objekte 50 und 51 beziehungsweise die benachbart parkenden Fahrzeuge und den Fußgänger als dynamisches Objekt 1. Diese Erfassung erfolgt auch während der Verdeckung des Erfassungsbereichs der Fahrzeugkamera durch den Fußgänger beziehungsweise durch das dynamische Objekt 1. Um die Objektposition, die Objektgeschwindigkeit und die Objektbewegungsrichtung des Fußgängers als dynamisches Objekt 1 genauer und auch während der Verdeckung des Erfassungsbereichs durch den Fußgänger zu ermitteln, werden die auf der Erfassung der Ultraschallsensoren basierenden Sensordaten des dynamischen Objekts 1 erfindungsgemäß klassifiziert beziehungsweise von den Sensordaten der Ultraschallsensoren zu den statischen Objekten 50 und 51 getrennt.

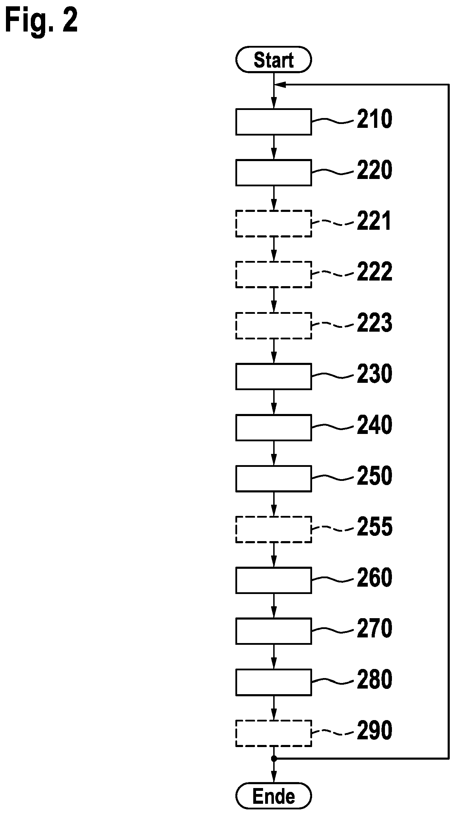

In Figur 2 ist ein Verfahrensablauf als Blockschaltbild schematisch dargestellt. In einem Verfahrensschritt 210 werden Sensordaten mittels der wenigstens zwei Ultraschallsensoren des Fahrzeugs erfasst beziehungsweise Sensordaten von den wenigstens zwei Ultraschallsensoren des Fahrzeugs empfangen. Die Sensordaten repräsentieren jeweils beispielsweise einen Abstand zwischen einem in der Umgebung 90 des Fahrzeugs 100 vorliegenden Objektes 1, 50, 51 und dem Fahrzeug 100 und vorteilhafterweise ein erfasstes Echosignal sowie insbesondere wenigstens eine Eigenschaften des Echosignals, wie beispielsweise einen Korrelationskoeffizienten zwischen dem erfassten Echosignal und dem ausgesendeten Ultraschallsignal. Anschließend wird im Schritt 220 eine aktuelle Reflexionsursprungsposition eines Objektes 1, 50, 51 relativ zu dem Fahrzeug 100 in Abhängigkeit der erfassten aktuellen Sensordaten ermittelt. In einem weiteren Verfahrensschritt 230 wird wenigstens ein Kamerabildes mittels der Fahrzeugkamera 121 erfasst. Es kann in einem sich zunächst an Schritt 220 anschließenden optionalen Schritt 221 vorgesehen sein, dass zumindest ein Teil der Sensordaten, umfassend das erfasste Echosignal, bezüglich der Amplitude basierend auf einer Winkellage der ermittelten aktuellen Reflexionsursprungsposition zum Erfassungsbereich des Ultraschallsensors normalisiert werden. In einem weiteren optionalen Schritt 222 wird zwischen zumindest einem Teil der erfassten der Reflexionsursprungsposition zugrundeliegenden Sensordaten und dem vom Ultraschallsensor ausgesendeten Sensorsignal ein Korrelationskoeffizienten ermittelt oder aus den zugrundeliegenden Sensordaten ausgelesen, falls dieser Korrelationskoeffizienten schon im Ultraschall-ASIC beziehungsweise der Ultraschallsensor-Recheneinheit ermittelt wurde und in den Sensordaten enthalten ist beziehungsweise bereitgestellt wird. Des Weiteren kann in einem optionalen Schritt 223 eine Anzahl der Reflexionen zu einem vom Ultraschallsensor ausgesendeten Sensorsignal in Abhängigkeit zumindest eines Teils der erfassten der aktuellen Reflexionsursprungsposition zugrundeliegenden Sensordaten ermittelt oder aus den zugrundeliegenden Sensordaten ausgelesen werden, falls diese Anzahl der Reflexionen zu einem vom Ultraschallsensor ausgesendeten Sensorsignal schon im Ultraschall-ASIC beziehungsweise der Ultraschallsensor-Recheneinheit ermittelt wurde und in den Sensordaten enthalten ist beziehungsweise bereitgestellt wird. Das Verfahren weist auch eine Erfassung 230 wenigstens eines Kamerabildes mittels der Fahrzeugkamera 121 auf. Anschließend wird eine Erkennung 240 des dynamischen Objektes 1 in Abhängigkeit des wenigstens einen erfassten Kamerabildes durchgeführt. Die Erkennung des dynamischen Objektes 1 erfolgt bevorzugt durch ein angelerntes maschinelles Erkennungsverfahren, insbesondere ein neuronales Netz. Es kann vorgesehen sein, dass das angelernte maschinelle Erkennungsverfahren dazu eingerichtet ist, individuelle Objektklassen dynamischer Objekte zu differenzieren beziehungsweise Unterklassen von dynamischen Objekten zu unterscheiden. Danach wird im Schritt 250 eine aktuelle Schätzposition des erkannten dynamischen Objektes 1 relativ zum Fahrzeug 100 in Abhängigkeit des wenigstens einen erfassten Kamerabildes bestimmt, insbesondere wird die aktuelle Schätzposition als Fußpunktermittlung des erkannten dynamischen Objektes 1 durchgeführt. Es kann optional ferner vorgesehen sein, dass vor einer Überprüfung 260 in einem optionalen Schritt 255 ein Distanzschwellenwert in Abhängigkeit einer Fahrzeuggeschwindigkeit des Fahrzeugs 100 angepasst wird. In dem weiteren Verfahrensschritt 260 wird überprüft, ob ein Positionsabstand zwischen der ermittelten aktuellen Schätzposition des erkannten dynamischen Objektes 1 und der ermittelten aktuellen Reflexionsursprungsposition kleiner oder gleich dem Distanzschwellenwert ist. Der Distanzschwellenwerts liegt vorzugsweise in einem Bereich zwischen 0,1 Meter und 5 Meter, insbesondere beträgt der Distanzschwellenwert 0,5 Meter, 1 Meter, 1,5 Meter oder 3 Meter. Wenn im Verfahrensschritt 260 erkannt wurde, dass der Positionsabstand zwischen der ermittelten aktuellen Schätzposition des erkannten dynamischen Objektes 1 und der ermittelten aktuellen Reflexionsursprungsposition kleiner oder gleich dem Distanzschwellenwert ist, wird diese aktuell ermittelte Reflexionsursprungsposition im Schritt 270 in Abhängigkeit der zur Ermittlung der aktuellen Reflexionsursprungsposition zugrundeliegenden Sensordaten und/oder in Abhängigkeit der optional ermittelten Eigenschaften des Echosignals der Sensordaten als zu dem erkannten dynamischen Objekt 1 zugehörig klassifiziert, insbesondere als einer erkannten spezifischen individuellen Objektklasse beziehungsweise Unterklasse von dynamischen Objekten zugehörig. Die Klassifikation 270 der aktuellen Reflexionsursprungsposition als zu dem erkannten dynamischen Objekt zugehörig kann optional zusätzlich in Abhängigkeit der während einer vorgegebenen Zeitspanne vor dem aktuellen Zeitpunkt in einer Umgebung der aktuellen Reflexionsursprungsposition liegenden als dem erkannten dynamischen Objekt bereits als zugehörig klassifizierten Reflexionsursprungspositionen durchgeführt werden, wobei die Klassifikation 270 dann vorteilhafterweise in Abhängigkeit der diesen Reflexionsursprungspositionen zugrundeliegenden Sensordaten und/oder in Abhängigkeit der optional ermittelten Eigenschaften des Echosignals der diesen Reflexionsursprungspositionen zugrundeliegenden Sensordaten erfolgt. Die die vorgegebene Zeitspanne liegt beispielsweise in einem Bereich zwischen 10 Millisekunden und 3 Sekunden. Die Umgebung der aktuellen Reflexionsursprungsposition umfasst vorzugsweise diejenigen dem dynamischen Objekt zugeordneten Reflexionsursprungspositionen, welche einen Abstand zu der aktuellen Reflexionsursprungsposition kleiner oder gleich einem Abstandsschwellenwert aufweisen. Alternativ oder zusätzlich umfasst die Umgebung der aktuellen Reflexionsursprungsposition wenigstens ein dem dynamischen Objekt zugeordnetes Ultraschallcluster. Das Ultraschallcluster weist insbesondere als dem dynamischen Objekt zugehörig klassifizierte Reflexionsursprungspositionen auf. Alternativ oder zusätzlich umfasst die Umgebung der aktuellen Reflexionsursprungsposition wenigstens eine Gitternetzzelle, in welcher die aktuelle Reflexionsursprungsposition liegt beziehungsweise zugeordnet ist, wobei das Gitternetz der Gitternetzzelle die Umgebung 90 des Fahrzeugs 100, insbesondere modellhaft, unterteilt, insbesondere in gleichmäßig verteilte rechteckige oder quadratische Gitternetzzellen beziehungsweise Umgebungsteilbereiche. Vorzugsweise erfolgt die Klassifikation 270 der aktuellen Reflexionsursprungsposition als dem erkannten dynamischen Objekt zugehörig in Abhängigkeit der im Schritt 221 ermittelten normalisierten zugrundeliegenden Sensordaten und in Abhängigkeit eines Amplitudenschwellenwertes, wobei vorzugsweise diejenigen Reflexionsursprungspositionen, welche eine normalisierte Amplitude kleiner oder gleich dem Amplitudenschwellenwert aufweisen, als zu dem erkannten dynamischen Objekt zugehörig klassifiziert werden. Alternativ oder zusätzlich erfolgt die Klassifikation 270 der aktuellen Reflexionsursprungsposition als dem erkannten dynamischen Objekt zugehörig in Abhängigkeit des ermittelten oder in den Sensordaten bereitgestellten Korrelationskoeffizienten und in Abhängigkeit eines Korrelationsschwellenwertes, wobei vorzugsweise diejenigen Reflexionsursprungspositionen, welche einen Korrelationskoeffizienten kleiner oder gleich dem Korrelationsschwellenwert aufweisen, als zu dem erkannten dynamischen Objekt zugehörig klassifiziert werden. Des Weiteren kann es alternativ oder zusätzlich vorgesehen sein, die Klassifikation 270 der aktuellen Reflexionsursprungsposition als dem erkannten dynamischen Objekt zugehörig in Abhängigkeit der ermittelten Anzahl an Reflexionen und in Abhängigkeit eines Anzahlschwellenwertes durchzuführen, wobei diejenigen Reflexionsursprungspositionen, welche eine Anzahl an Reflexionen kleiner oder gleich dem Anzahlschwellenwert aufweisen, als zu dem erkannten dynamischen Objekt zugehörig klassifiziert werden. Besonders bevorzugt wird die Klassifikation 270 der aktuellen Reflexionsursprungsposition als zu dem erkannten dynamischen Objekt zugehörig durch ein zweites angelerntes maschinelles Erkennungsverfahrens durchgeführt, insbesondere durch ein trainiertes zweites neuronales Netz. Das trainierte zweite neuronale Netz kann beispielsweise basierend auf einer oder mehrerer Eigenschaften des Echosignals, wie der wenigstens einen erfassten oder normalisierten Amplitude und/oder der enthaltene Anzahl an Reflexionen in dem Echosignal und/oder dem Korrelationskoeffizienten, eine Wahrscheinlichkeit für die aktuellen Reflexionsursprungsposition als zu dem erkannten dynamischen Objekt zugehörig bestimmen beziehungsweise erkennen. Nach der Klassifikation 270 der aktuellen Reflexionsursprungsposition als zu dem erkannten dynamischen Objekt zugehörig erfolgt eine Ermittlung 280 der angenäherten Objektposition des dynamischen Objektes in Abhängigkeit der als dem dynamischen Objekt zugehörig klassifizierten Reflexionsursprungspositionen, insbesondere durch einen Kalman-Filter. Anschließend kann es im optionalen Schritt 290 vorgesehen sein, eine aktuelle Objektgeschwindigkeit und/oder eine aktuelle Objektbewegungsrichtung des dynamischen Objektes in Abhängigkeit der ermittelten angenäherten Objektpositionen des dynamischen Objektes zu unterschiedlichen Zeitpunkten zu ermitteln. In einer optionalen Ausgestaltung wird die Ermittlung 280 der angenäherten Objektposition des dynamischen Objektes und/oder die optionale Ermittlung 290 der aktuellen Objektgeschwindigkeit und/oder der aktuellen Objektbewegungsrichtung des dynamischen Objektes nicht durchgeführt, wenn eine Anzahl der als dem dynamischen Objekt zugehörig klassifizierten Reflexionsursprungspositionen eine vorgegebene Konfidenzanzahl unterschreitet. Darüber hinaus kann in wenigstens einem weiteren optionalen Schritt eine Bestimmung einer statistischen Unsicherheit in Abhängigkeit der erfassten Sensordaten, der ermittelten aktuellen Reflexionsursprungsposition, der als dem dynamischen Objekt zugehörig klassifizierten Reflexionsursprungspositionen und/oder der ermittelten angenäherten Objektposition durchgeführt werden (nicht in Figur 2 dargestellt). Anschließend erfolgt die Anpassung 255 des Distanzschwellenwerts alternativ oder zusätzlich in Abhängigkeit der bestimmten statistischen Unsicherheit. Das Verfahren wird bevorzugt kontinuierlich durchgeführt.

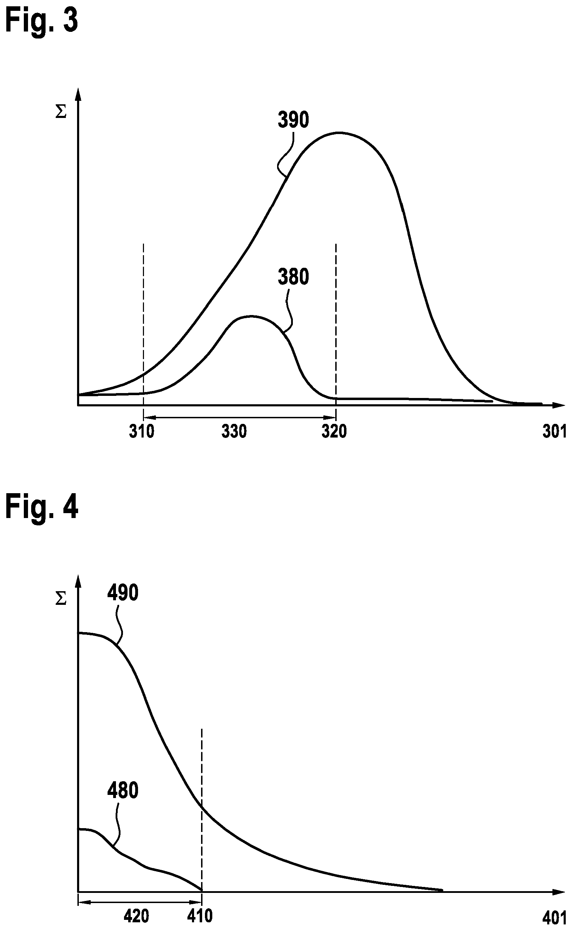

In Figur 3 ist eine statistische Verteilung der Amplituden 301 beziehungsweise der Amplitudenbeträge von Echosignalen, welche an statischen Objekten 50 und 51 und dynamischen Objekten 1 reflektiert wurden, schematisch dargestellt. Der Graph 390 betrifft die statistische Verteilung der Amplituden 301 beziehungsweise der Amplitudenbeträge von Echosignalen, welche an statischen Objekten 50 und 51 reflektiert wurden. Der Graph 380 betrifft die statistische Verteilung der Amplituden 301 beziehungsweise der Amplitudenbeträge von Echosignalen, welche an dynamischen Objekten 1 reflektiert wurden. Es ist erkennbar, dass typischerweise ein dynamisches Objekt 1 keine Amplitude 301 aufweist, welche kleiner als ein erster Amplitudenschwellenwert 310 oder größer als ein zweiter Amplitudenschwellenwert 320 ist. Wenn die Amplitude des Echosignals folglich kleiner dem ersten Amplitudenschwellenwert 310 oder größer dem zweiten Amplitudenschwellenwert 320 ist, kann mit großer Wahrscheinlichkeit ausgeschlossen werden, dass ein dynamisches Objekt vorliegt. Wenn die Amplitude im Bereich 330 zwischen Amplitudenschwellenwert 310 und dem zweiten Amplitudenschwellenwert 320 liegt beziehungsweise größer oder gleich dem ersten Amplitudenschwellenwert 310 und kleiner oder gleich dem zweiten Amplitudenschwellenwert 320 ist, ist eine Klassifikation allerdings nicht eindeutig, da in diesem Bereich 330 sowohl Amplituden von Echosignalen, welche an statischen Objekten reflektiert wurden als auch Amplituden von Echosignalen, welche an dynamischen Objekten reflektiert wurden, vorliegen. Der Bereich 330 wird deutlich enger, das heißt ein Ausschluss, der von statischen Objekten verursachten Reflexionsursprungspositionen, verbessert, wenn die Amplitude des jeweiligen Echosignals in Abhängigkeit der Winkellage der dazu ermittelten Reflexionsursprungsposition im Erfassungsbereich des jeweiligen Ultraschallsensors zusätzlich jeweils normalisiert wird, da die Amplituden der Echosignale auch in Abhängigkeit dieser Winkellage relativ stark variieren.

In Figur 4 ist eine statistische Verteilung des Korrelationskoeffizienten 401 zwischen dem ausgesendeten Ultraschallsignals eines Ultraschallsensors 111 und dem empfangenen Echosignal des Ultraschallsensors 111 schematisch dargestellt, wobei die Reflexion des ausgesendeten Ultraschallsignals an statischen und dynamischen Objekten erfolgt. Der Graph 490 betrifft die statistische Verteilung der Korrelationskoeffizienten 401 beziehungsweise der Beträge der Korrelationskoeffizienten 401 von Echosignalen, welche an statischen Objekten 50 und 51 reflektiert wurden. Der Graph 480 betrifft die statistische Verteilung der Korrelationskoeffizienten 401 beziehungsweise der Beträge der Korrelationskoeffizienten 401 von Echosignalen, welche an dynamischen Objekten 1 reflektiert wurden. Es ist erkennbar, dass oberhalb eines Schwellenwertes 410 für den Korrelationskoeffizienten 401 keine Korrelationskoeffizienten vorliegen, welche mit einem dynamischen Objekt assoziiert werden können. Mit anderen Worten sind die Korrelationskoeffizienten zu Echosignalen, welche an dynamischen Objekten reflektiert wurden, typischerweise kleiner oder gleich dem Schwellenwert 410 für den Korrelationskoeffizienten 401. Wenn der Korrelationskoeffizient kleiner oder gleich dem Schwellenwert 410 für den Korrelationskoeffizienten 401 liegt, ist eine Klassifikation als zu einem dynamischen Objekt zugehörig allerdings nicht eindeutig, da in diesem Bereich 420 sowohl Korrelationskoeffizienten 401 von Echosignalen, welche an statischen Objekten reflektiert wurden als auch Korrelationskoeffizienten 401 von Echosignalen, welche an dynamischen Objekten reflektiert wurden, vorliegen.

Die Klassifikation 270 der jeweiligen Reflexionsursprungspositionen in Abhängigkeit von den in Figur 3 und 4 gezeigten Eigenschaften der zugrundeliegenden Echosignale erfolgt bevorzugt durch ein angelerntes maschinelles Erkennungsverfahren , insbesondere ein trainiertes neuronales Netz, wobei zu Beurteilung der Wahrscheinlichkeit für das Vorliegen eines dynamischen Objektes weitere Eigenschaften der zugrundeliegenden Echosignale berücksichtigt werden können, beispielsweise die Anzahl der im Echosignal bestimmten Reflexionen. Durch die Beurteilung einer Vielzahl an Eigenschaften der Echosignale durch das angelernte maschinelle Erkennungsverfahren, insbesondere das trainierte neuronale Netz, wird die Klassifikation 270 einer aktuellen Reflexionsursprungsposition als zu einem erkannten dynamischen Objekt zugehörig sehr zuverlässig.

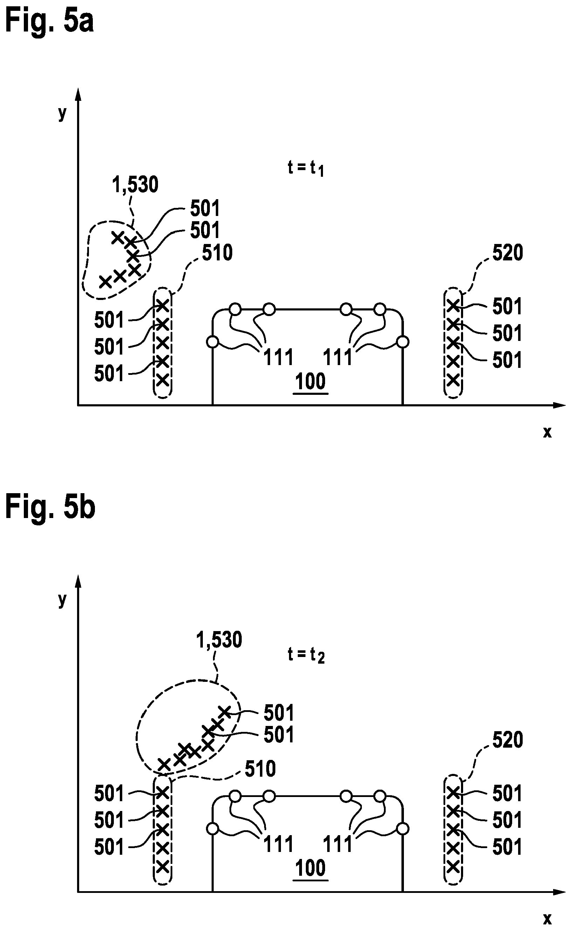

In Figur 5a und Figur 5b sind ermittelte Reflexionsursprungspositionen 501 in der Umgebung 90 des Fahrzeugs 100 in einer x-y-Ebene beziehungsweise in einer Karte in senkrechter Aufsicht von oben zu unterschiedlichen Zeitpunkten t1 und t2 schematisch dargestellt, wobei die in Figur 5a und Figur 5b dargestellten Reflexionsursprungspositionen beispielsweise aus einer Situationen eines hinter dem Fahrzeug 100 passierenden Fußgängers als dynamisches Objekt gemäß Fig.1 resultiert. Der Zeitpunkt t2 liegt beispielsweise nach dem Zeitpunkt t1, könnte allerdings in einer anderen Situation auch umgekehrt sein, wenn sich beispielsweise der Fußgänger hinter dem Fahrzeug in umgekehrter Richtung bewegt. Die ermittelten Reflexionsursprungspositionen 501 repräsentieren somit im Bereich 510 das statische Objekt 50 und im Bereich 520 das statische Objekt 51 (die benachbart parkenden Fahrzeuge aus Figur 1) sowie im Bereich 530 den Fußgänger als das dynamische Objekt 1. Die Klassifikation 270 der jeweiligen aktuellen Reflexionsursprungspositionen 501 im Verfahrensschritt 270 erfolgt demnach bevorzugt auch in Abhängigkeit der Reflexionsursprungspositionen 501 in der Umgebung der aktuellen Reflexionsursprungsposition 501.

In Figur 5b ist die Situation aus Figur 5a zu einem späteren Zeitpunkt dargestellt. Der Bereich 510, welcher das statische Objekt 50 repräsentiert, grenzt in diesem Ausführungsbeispiel unmittelbar an den Bereich 530 an, welcher in diesem Fall den Fußgänger als das dynamische Objekt 1 repräsentiert. Die Bereiche 510, 520 und 530 können sich auch überschneiden (hier nicht gezeigt), beispielsweise, wenn ein Fußgänger als dynamisches Objekt 1 auf einem Fußweg mit Bordsteinkante am Fahrzeug 100 vorbei geht. Es ist in Figur 5b erkennbar, dass die örtliche Nähe der Reflexionsursprungspositionen zueinander in einer Karte der Umgebung des Fahrzeugs 100 nicht ausreicht, um eine zuverlässige Klassifikation 270 der (aktuellen) Reflexionsursprungsposition durchführen zu können. Deshalb erfolgt die Klassifikation 270 in Abhängigkeit von den der jeweiligen aktuellen Reflexionsursprungspositionen 501 zugrundeliegenden Sensordaten, welche wenigstens eine Eigenschaft des Echosignals umfassen kann, und/oder in Abhängigkeit ermittelter Eigenschaften des Echosignals dieser Sensordaten und/oder in Abhängigkeit der Reflexionsursprungspositionen 501 in der Umgebung der aktuellen Reflexionsursprungsposition 501, wobei diese Klassifikation 270 besonders bevorzugt, wie oben beschrieben, durch ein angelerntes maschinelles Erkennungsverfahren durchgeführt wird.

## Patentansprüche

1. Verfahren zur Ermittlung einer angenäherten Objektposition eines dynamischen Objektes (1) im Umfeld (90) eines Fahrzeugs (100), wobei das Fahrzeug (100) mindestens zwei Ultraschallsensoren (111) und mindestens eine Fahrzeugkamera (121) aufweist, umfassend wenigstens die folgenden Verfahrensschritte
• Erfassung (210) von Sensordaten mittels der wenigstens zwei Ultraschallsensoren (111),
• Ermittlung (220) einer aktuellen Reflexionsursprungsposition (501) eines statischen oder dynamischen Objektes (1, 50, 51) in Abhängigkeit der erfassten Sensordaten,
• Erfassung (230) wenigstens eines Kamerabildes mittels der Fahrzeugkamera (121),
• Erkennung (240) des dynamischen Objektes (1) in Abhängigkeit des wenigstens einen erfassten Kamerabildes, und
• Ermittlung (250) einer aktuellen Schätzposition des erkannten dynamischen Objektes (1) relativ zum Fahrzeug (100) in Abhängigkeit des wenigstens einen erfassten Kamerabildes, wobei, wenn ein Positionsabstand zwischen der ermittelten aktuellen Schätzposition des erkannten dynamischen Objektes (1) und der ermittelten aktuellen Reflexionsursprungsposition (501) kleiner oder gleich einem Distanzschwellenwert ist, folgende Schritte durchgeführt werden
• Klassifikation (270) der aktuellen Reflexionsursprungsposition in Abhängigkeit der zur Ermittlung der aktuellen Reflexionsursprungsposition zugrundeliegenden Sensordaten als zu dem erkannten dynamischen Objekt (1) zugehörig, und
• Ermittlung (280) der angenäherten Objektposition des dynamischen Objektes (1) in Abhängigkeit der als dem dynamischen Objekt (1) zugehörig klassifizierten Reflexionsursprungspositionen.

2. Verfahren nach Anspruch 1, wobei die Klassifikation (270) der aktuellen Reflexionsursprungsposition (501) als dem erkannten dynamischen Objekt (1) zugehörig zusätzlich in Abhängigkeit der zugrundeliegenden Sensordaten der während einer vorgegebenen Zeitspanne vor dem aktuellen Zeitpunkt in einer Umgebung der aktuellen Reflexionsursprungsposition (501) liegenden als dem erkannten dynamischen Objekt zugehörig klassifizierten Reflexionsursprungspositionen (501) erfolgt.

3. Verfahren nach Anspruch 2, wobei
• die Umgebung (530) der aktuellen Reflexionsursprungsposition (501) diejenigen dem dynamischen Objekt (1) zugeordneten Reflexionsursprungspositionen (501) umfasst, welche einen Abstand zu der aktuellen Reflexionsursprungsposition (501) kleiner oder gleich einem Abstandsschwellenwert aufweisen, und/oder
• die Umgebung (530) der aktuellen Reflexionsursprungsposition (501) wenigstens ein dem dynamischen Objekt (1) zugeordnetes Ultraschallcluster umfasst, wobei das Ultraschallcluster insbesondere als dem dynamischen Objekt (1) zugehörig klassifizierte Reflexionsursprungspositionen (501) aufweist, und/oder
• die Umgebung (530) der aktuellen Reflexionsursprungsposition (501) wenigstens eine Gitternetzzelle, in welcher die aktuelle Reflexionsursprungsposition (501) liegt beziehungsweise zugeordnet ist, wobei das Gitternetz der Gitternetzzelle die Umgebung (90) des Fahrzeugs (100) unterteilt.

4. Verfahren nach einem der vorhergehenden Ansprüche, wobei zusätzlich folgender Schritt durchgeführt wird
• Ermittlung (290) einer aktuellen Objektgeschwindigkeit und/oder einer aktuellen Objektbewegungsrichtung des dynamischen Objektes (1) in Abhängigkeit der ermittelten angenäherten Objektpositionen des dynamischen Objektes (1) zu unterschiedlichen Zeitpunkten.

5. Verfahren nach Anspruch 4, wobei die Ermittlung (280) der angenäherten Objektposition des dynamischen Objektes (1) und/oder die Ermittlung (290) der aktuellen Objektgeschwindigkeit des dynamischen Objektes (1) und/oder der aktuellen Objektbewegungsrichtung des dynamischen Objektes (1) jeweils nicht durchgeführt wird, wenn eine Anzahl der als dem dynamischen Objektes (1) zugehörig klassifizierten Reflexionsursprungspositionen (501) eine vorgegebene Konfidenzanzahl unterschreitet.

6. Verfahren nach einem der vorhergehenden Ansprüche, wobei zusätzlich folgender Schritt durchgeführt wird
• Bestimmung einer statistischen Unsicherheit in Abhängigkeit der erfassten Sensordaten, der ermittelten aktuellen Reflexionsursprungsposition (501), der als dem dynamischen Objekt (1) zugehörig klassifizierten Reflexionsursprungspositionen (501) und/oder der ermittelten angenäherten Objektposition, und
• Anpassung (255) des Distanzschwellenwerts in Abhängigkeit der bestimmten statistischen Unsicherheit.

7. Verfahren nach einem der vorhergehenden Ansprüche, wobei der Distanzschwellenwerts in einem Bereich zwischen 0,1 Meter und 5 Meter liegt.

8. Verfahren nach einem der vorhergehenden Ansprüche, wobei zusätzlich folgender Schritt durchgeführt wird
• Normalisierung (221) zumindest eines Teils der zur Ermittlung der aktuellen Reflexionsursprungsposition (501) zugrundeliegenden Sensordaten bezüglich ihrer Amplitude basierend auf einer Winkellage der ermittelten aktuellen Reflexionsursprungsposition (501) zum Erfassungsbereich des jeweiligen Ultraschallsensors (111), wobei
• die Klassifikation (270) der aktuellen Reflexionsursprungsposition (501) als dem erkannten dynamischen Objekt (1) zugehörig in Abhängigkeit der normalisierten zugrundeliegenden Sensordaten und in Abhängigkeit wenigstens eines Amplitudenschwellenwertes erfolgt.

9. Verfahren nach einem der vorhergehenden Ansprüche, wobei zusätzlich folgender Schritt durchgeführt wird
• Ermittlung (222) eines Korrelationskoeffizienten zwischen zumindest einem Teil der erfassten der Reflexionsursprungsposition zugrundeliegenden Sensordaten und dem vom jeweiligen Ultraschallsensor (111) ausgesendeten Sensorsignal, wobei
• die Klassifikation (270) der aktuellen Reflexionsursprungsposition (501) als dem erkannten dynamischen Objekt (1) zugehörig in Abhängigkeit des ermittelten Korrelationskoeffizienten und in Abhängigkeit eines Schwellenwertes für den Korrelationskoeffizienten erfolgt.

10. Verfahren nach einem der vorhergehenden Ansprüche, wobei zusätzlich folgender Schritt durchgeführt wird
• Ermittlung (223) einer Anzahl der Reflexionen zu einem vom jeweiligen Ultraschallsensor (111) ausgesendeten Sensorsignal in Abhängigkeit zumindest eines Teils der erfassten der aktuellen Reflexionsursprungsposition (501) zugrundeliegenden Sensordaten, wobei
• die Klassifikation (270) der aktuellen Reflexionsursprungsposition (501) als dem erkannten dynamischen Objekt (1) zugehörig in Abhängigkeit der ermittelten Anzahl an Reflexionen und in Abhängigkeit eines Anzahlschwellenwertes erfolgt.

11. Vorrichtung für ein Fahrzeug (100), umfassend mindestens folgende Komponenten
• einen ersten Signaleingang, welcher dazu eingerichtet ist, wenigstens ein erstes Signal bereitzustellen, welches erfasste Sensordaten von einem Ultraschallsensor (111) des Fahrzeugs (100) repräsentiert,
• einen zweiten Signaleingang, welcher dazu eingerichtet ist, ein zweites Signal bereitzustellen, welches erfasste Kamerabilder einer Fahrzeugkamera (121) repräsentiert, wobei
• die Vorrichtung so konfiguriert ist, dass sie die Schritte des Verfahrens gemäß einem der Ansprüche 1 bis 10 ausführt.

12. Vorrichtung nach Anspruch 11, zusätzlich umfassend
• einen Signalausgang, wobei der Signalausgang dazu eingerichtet ist, ein Steuersignal für eine Anzeigevorrichtung (160), eine Bremseinrichtung (161), eine Lenkeinrichtung (162) und/oder einen Antriebsmotor (163) in Abhängigkeit einer durch das Verfahren ermittelten angenäherten Objektposition des dynamischen Objektes (1) zu erzeugen.

13. Fahrzeug (100), umfassend eine Vorrichtung nach einem der Ansprüche 11 oder 12.

14. Computerprogramm, umfassend Befehle, die bei der Ausführung des Programms durch eine Vorrichtung gemäß einem der Ansprüche 11 oder 12 diese veranlassen, die Schritte des Verfahrens gemäß einem der Ansprüche 1 bis 10 auszuführen.

## Claims

1. Method for determining an approximated object position of a dynamic object (1) in the surroundings (90) of a vehicle (100), wherein the vehicle (100) comprises at least two ultrasonic sensors (111) and at least one vehicle camera (121), comprising at least the following method steps
• capturing (210) sensor data by means of the at least two ultrasonic sensors (111),
• determining (220) a current reflection origin position (501) of a static or dynamic object (1, 50, 51) depending on the captured sensor data,
• capturing (230) at least one camera image by means of the vehicle camera (121),
• identifying (240) the dynamic object (1) depending on the at least one captured camera image, and
• determining (250) a current estimated position of the identified dynamic object (1) relative to the vehicle (100) depending on the at least one captured camera image,
wherein, if a position distance between the determined current estimated position of the identified dynamic object (1) and the determined current reflection origin position (501) is less than or equal to a distance threshold value, the following steps are carried out
• classifying (270) the current reflection origin position depending on the sensor data underlying the determination of the current reflection origin position as associated with the identified dynamic object (1), and
• determining (280) the approximated object position of the dynamic object (1) depending on the reflection origin positions classified as associated with the dynamic object (1).

2. Method according to Claim 1, wherein the classification (270) of the current reflection origin position (501) as associated with the identified dynamic object (1) is additionally carried out depending on the underlying sensor data of the reflection origin positions (501) classified as associated with the identified dynamic object, which are located in the surroundings of the current reflection origin position (501) during a predetermined time span before the current time.

3. Method according to Claim 2, wherein
• the surroundings (530) of the current reflection origin position (501) comprise those reflection origin positions (501) assigned to the dynamic object (1) which have a distance to the current reflection origin position (501) less than or equal to a distance threshold value, and/or
• the surroundings (530) of the current reflection origin position (501) comprise at least one ultrasonic cluster assigned to the dynamic object (1), wherein the ultrasonic cluster in particular comprises reflection origin positions (501) classified as associated with the dynamic object (1), and/or
• the surroundings (530) of the current reflection origin position (501) comprise at least one grid network cell, in which the current reflection origin position (501) is located or assigned, wherein the grid network of the grid network cell divides the surroundings (90) of the vehicle (100).

4. Method according to any one of the preceding claims, wherein in addition the following step is carried out
• determining (290) a current object speed and/or a current object movement direction of the dynamic object (1) depending on the determined approximated object positions of the dynamic object (1) at different times.

5. Method according to Claim 4, wherein the determination (280) of the approximated object position of the dynamic object (1) and/or the determination (290) of the current object speed of the dynamic object (1) and/or the current object movement direction of the dynamic object (1) are each not carried out if a number of the reflection origin positions (501) classified as associated with the dynamic object (1) falls below a predetermined confidence number.

6. Method according to any one of the preceding claims, wherein in addition the following step is carried out
• determining a statistical uncertainty depending on the captured sensor data, the determined current reflection origin position (501), the reflection origin positions (501) classified as associated with the dynamic object (1), and/or the determined approximated object position, and
• adapting (255) the distance threshold value depending on the determined statistical uncertainty.

7. Method according to any one of the preceding claims, wherein the distance threshold value is in a range between 0.1 m and 5 m.

8. Method according to any one of the preceding claims, wherein in addition the following step is carried out
• normalizing (221) at least a part of the sensor data underlying the determination of the current reflection origin position (501) with respect to their amplitude based on an angular position of the determined current reflection origin position (501) in relation to the capture area of the respective ultrasonic sensor (111), wherein
• the classification (270) of the current reflection origin position (501) as associated with the identified dynamic object (1) is carried out depending on the normalized underlying sensor data and depending on at least one amplitude threshold value.

9. Method according to any one of the preceding claims, wherein in addition the following step is carried out
• determining (222) a correlation coefficient between at least a part of the captured sensor data underlying the reflection origin position and the sensor signal emitted by the respective ultrasonic sensor (111), wherein
• the classification (270) of the current reflection origin position (501) as associated with the identified dynamic object (1) is carried out depending on the determined correlation coefficient and depending on a threshold value for the correlation coefficient.

10. Method according to any one of the preceding claims, wherein in addition the following step is carried out
• determining (223) a number of the reflections to a sensor signal emitted by the respective ultrasonic sensor (111) depending on at least a part of the captured sensor data underlying the current reflection origin position (501), wherein
• the classification (270) of the current reflection origin position (501) as associated with the identified dynamic object (1) is carried out depending on the determined number of reflections and depending on a number threshold value.

11. Device for a vehicle (100), comprising at least the following components
• a first signal input, which is configured to provide at least one first signal, which represents captured sensor data from an ultrasonic sensor (111) of the vehicle (100),
• a second signal input, which is configured to provide a second signal, which represents captured camera images of a vehicle camera (121), wherein
• the device is configured to carry out the steps of the method according to any one of Claims 1 to 10.

12. Device according to Claim 11, additionally comprising
• a signal output, wherein the signal output is configured to generate a control signal for a display device (160), a braking device (161), a steering device (162), and/or a drive motor (163) depending on an approximated object position of the dynamic object (1) determined by the method.

13. Vehicle (100), comprising a device according to one of Claims 11 or 12.

14. Computer program, comprising commands which, when the program is executed by a device according to one of Claims 11 or 12, cause it to carry out the steps of the method according to any one of Claims 1 to 10.

## Revendications

1. Procédé de détermination d'une position d'objet approximative d'un objet dynamique (1) dans l'environnement (90) d'un véhicule (100), le véhicule (100) comportant au moins deux capteurs à ultrasons (111) et au moins une caméra (121) de véhicule, comprenant au moins les étapes de procédé suivantes
• détection (210) de données de capteur au moyen des au moins deux capteurs à ultrasons (111),
• détermination (220) d'une position d'origine de réflexion (501) actuelle d'un objet statique ou dynamique (1, 50, 51) en fonction des données de capteur détectées,
• détection (230) d'au moins une image de caméra au moyen de la caméra (121) de véhicule,
• identification (240) de l'objet dynamique (1) en fonction de l'au moins une image de caméra détectée, et
• détermination (250) d'une position estimée actuelle de l'objet dynamique (1) identifié par rapport au véhicule (100) en fonction de l'au moins une image de caméra détectée,
les étapes suivantes étant effectuées, lorsqu'une distance de position entre la position estimée actuelle déterminée de l'objet dynamique (1) identifié et la position d'origine de réflexion (501) actuelle déterminée est inférieure ou égale à une valeur de seuil de distance,
• classification (270) de la position d'origine de réflexion actuelle en fonction des données de capteur sous-jacentes pour la détermination de la position d'origine de réflexion actuelle comme appartenant à l'objet dynamique (1) identifié, et
• détermination (280) de la position d'objet approximative de l'objet dynamique (1) en fonction des positions d'origine de réflexion classifiées comme appartenant à l'objet dynamique (1).

2. Procédé selon la revendication 1, la classification (270) de la position d'origine de réflexion actuelle (501) comme appartenant à l'objet dynamique (1) identifié étant effectuée en supplément en fonction des données de capteur sous-jacentes des positions d'origine de réflexion (501) classifiées comme appartenant à l'objet dynamique identifié situées pendant une période de temps prédéfinie avant le moment actuel dans un environnement de la position d'origine de réflexion (501) actuelle.

3. Procédé selon la revendication 2,
• l'environnement (530) de la position d'origine de réflexion (501) actuelle comprenant ces positions d'origine de réflexion (501) associées à l'objet dynamique (1), qui présentent une distance par rapport à la position d'origine de réflexion (501) actuelle inférieure ou égale à une valeur de seuil de distance, et/ou
• l'environnement (530) de la position d'origine de réflexion (501) actuelle comprenant au moins un groupe d'ultrasons associé à l'objet dynamique (1), le groupe d'ultrasons comportant en particulier des positions d'origine de réflexion (501) classifiées comme appartenant à l'objet dynamique (1), et/ou
• l'environnement (530) de la position d'origine de réflexion (501) actuelle comprenant au moins une cellule de grille, dans laquelle se trouve ou est associée la position d'origine de réflexion (501) actuelle, la grille de la cellule de grille divisant l'environnement (90) du véhicule (100).

4. Procédé selon l'une des revendications précédentes, une étape suivante étant effectuée en supplément
• détermination (290) d'une vitesse d'objet actuelle et/ou d'une direction de déplacement d'objet actuelle de l'objet dynamique (1) en fonction des positions d'objet approximatives déterminées de l'objet dynamique (1) à des moments différents.

5. Procédé selon la revendication 4, la détermination (280) de la position d'objet approximative de l'objet dynamique (1) et/ou la détermination (290) de la vitesse d'objet actuelle de l'objet dynamique (1) et/ou de la direction de déplacement d'objet actuelle de l'objet dynamique (1) n'étant pas effectuées respectivement lorsqu'un nombre des positions d'origine de réflexion (501) classifiées comme appartenant à l'objet dynamique (1) ne dépasse pas un nombre de confiance prédéfini.

6. Procédé selon l'une des revendications précédentes, une étape suivante étant effectuée en supplément
• définition d'une incertitude statistique en fonction des données de capteur détectées, de la position d'origine de réflexion (501) actuelle déterminée, des positions d'origine de réflexion (501) classifiées comme appartenant à l'objet dynamique (1) et/ou de la position d'objet approximative déterminée, et
• adaptation (255) de la valeur de seuil de distance en fonction de l'incertitude statistique définie.

7. Procédé selon l'une des revendications précédentes, la valeur de seuil de distance se situant dans une plage entre 0,1 mètre et 5 mètres.

8. Procédé selon l'une des revendications précédentes, une étape suivante étant effectuée en supplément
• normalisation (221) d'au moins une partie des données de capteur sous-jacentes pour la détermination de la position d'origine de réflexion (501) actuelle par rapport à leur amplitude sur la base d'une position angulaire de la position d'origine de réflexion (501) actuelle déterminée par rapport à la plage de détection du capteur à ultrasons (111) respectif,
• la classification (270) de la position d'origine de réflexion (501) actuelle comme appartenant à l'objet dynamique (1) identifié étant effectuée en fonction des données de capteur sous-jacentes normalisées et en fonction d'au moins une valeur de seuil d'amplitude.

9. Procédé selon l'une des revendications précédentes, une étape suivante étant effectuée en supplément
• détermination (222) d'un coefficient de corrélation entre au moins une partie des données de capteur détectées sous-jacentes à la position d'origine de réflexion et le signal de capteur envoyé par le capteur à ultrasons (111) respectif,
• la classification (270) de la position d'origine de réflexion (501) actuelle comme appartenant à l'objet dynamique (1) étant effectuée en fonction du coefficient de corrélation déterminé et en fonction d'une valeur de seuil pour le coefficient de corrélation.

10. Procédé selon l'une des revendications précédentes, une étape suivante étant effectuée en supplément
• détermination (223) d'un nombre des réflexions vers un signal de capteur envoyé par le capteur à ultrasons (111) respectif en fonction d'au moins une partie des données de capteur détectées sous-jacentes à la position d'origine de réflexion (501) actuelle,
• la classification (270) de la position d'origine de réflexion (501) actuelle comme appartenant à l'objet dynamique (1) identifié étant effectuée en fonction du nombre de réflexions déterminé et en fonction d'une valeur de seuil de nombre.

11. Dispositif pour un véhicule (100), comprenant au moins des composants suivants
• une première entrée de signal, qui est mise au point pour fournir au moins un premier signal, qui représente des données de capteur détectées d'un capteur à ultrasons (111) du véhicule (100),
• une deuxième entrée de signal, qui est mise au point pour fournir un deuxième signal, qui représente des images de caméra détectées d'une caméra (121) de véhicule,
• le dispositif étant configuré de telle sorte qu'il exécute les étapes du procédé selon l'une des revendications 1 à 10.

12. Dispositif selon la revendication 11, comprenant en supplément
• une sortie de signal, la sortie de signal étant mise au point pour générer un signal de commande pour un dispositif d'affichage (160), un dispositif de freinage (161), un dispositif de direction (162) et/ou un moteur d'entraînement (163) en fonction d'une position d'objet approximative de l'objet dynamique (1) déterminée par le procédé.

13. Véhicule (100) comprenant un dispositif selon l'une des revendications 11 ou 12.

14. Programme informatique, comprenant des instructions qui, lors de l'exécution du programme par un dispositif selon l'une des revendications 11 ou 12, amènent celui-ci à exécuter les étapes du procédé selon l'une des revendications 1 à 10.
